# EUROPEAN PATENT APPLICATION

(11) **EP 1 881 627 A2**
(43) Date of publication of application: **23.01.2008**
(21) Application number: 07014415.9
(22) Date of filing: 23.07.2007
(51) Int. Cl.: H04H 1/00

(54) **Method and apparatus for transmitting / receiving an electronic service guide in digital broadcasting system**

(30) Priority: 21.07.2006 KR 20060068643; 21.08.2006 KR 20060079037; 22.09.2006 KR 20060092460; 29.06.2007 KR 20070065311
(71) Applicant: Samsung Electronics Co., Ltd., Suwon-si Gyeonggi-do (KR)
(72) Inventor: Song, Jae-Yeon, Gyeonggi-do (KR); Lee, Kook-Heui, Gyeonggi-do (KR)
(74) Representative: Lang, Johannes

(57) **Abstract**

Disclosed is a method and apparatus for transmitting/receiving signaling information to transfer Electronic Service Guide (ESG) data using a multi-stream mode in providing an ESG in a digital broadcasting system the method including collecting ESG data to be transmitted, setting a number of IP streams to transmit the ESG data in order to transmit the ESG data in a multi-stream mode, generating partitioning information used for each of the IP streams, the partitioning information including at least one partitioning rule to partition the ESG data into the IP streams and at least one partitioning value for each of the partitioning rule, in which the partitioning rule includes at least one among a service ID, a service genre, an absolute time, a session type, and a profiling type defined by a provider, and the at least one partitioning value includes at least one of a start value and an end value according to the partitioning rule, and transmitting the ESG data, which has been partitioned according to the partitioning information, through the IP streams.

## Description

### BACKGROUND OF THE INVENTION

### 1. Field of the Invention

The present invention relates generally to a digital broadcasting system, and more particularly to a method and apparatus for transmitting/receiving an Electronic Service Guide (ESG) including information about a broadcast program.

### 2. Description of the Related Art

A Digital Video Broadcasting (DVB) system, which is European digital broadcasting technology, corresponds to a transmission standard for supporting a mobile/portable digital multimedia service, as well as existing digital broadcasting.

In the DVB system, it is possible to multiplex Motion Picture Experts Group - 2 (MPEG-2) Transport Stream (TS)-based broadcast data and to simultaneously transmit Internet Protocol (IP)-based data streams. Also, in the DVB system, various services can be multiplexed in a single IP stream for transmission, and a receiver can receive the data of the transmitted IP stream, demultiplex the received data into individual service so as to decode the service, and output the decoded service to a user through a display. In this case, the user needs such information as the types of the various services provided by the DVB system and the content of each service.

In the DVB system, an Electronic Service Guide (ESG) is employed in order to report information about each service. The ESG includes time such information as that of a specific service, related content, information necessary for receiving the content and information necessary for purchasing the content. An ESG provider configures a data model for efficient transmission of an ESG, and determines ESG data to be transmitted based on the data model.

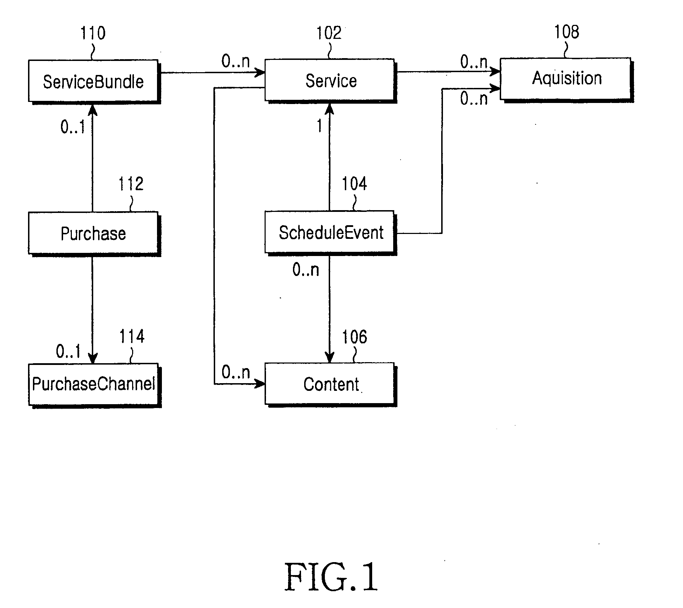

FIG. 1 illustrates an ESG data model of a DVB system. Each block in FIG. 1 denotes a fragment of an ESG. That is, the ESG data model includes fragments for service 102, Schedule Event 104, Content 106, Acquisition 108, Service Bundle 110, Purchase 112 and Purchase Channel 114.

The service fragment 102 includes a description about the entire service, the Schedule Event fragment 104 includes service information according to time, and the Acquisition fragment 108 includes information necessary for receiving actual service data. The Service Bundle fragment 110 includes information about a service bundle in which a plurality of services are bundled and provided, the Purchase fragment 112 reports cost information for purchasing the service bundle, and the Purchase Channel fragment 114 reports information about a system, which must be used in order to acquire the right for the purchase.

Each fragment of the data model may reference other fragments. The reference signifies that a current fragment reports information related to its own fragment by using information transmitted through other fragments. That is, when one service includes multiple contents, the service fragment 102 includes a description about the entire service, e.g., the name of the service and the language used in the service, but does not include a description about contents transmitted through the service. Instead, the service fragment 102 refers to the Content fragment 106 of corresponding content. Further, various information necessary for receiving the service, e.g., session information used in a transport protocol, can be obtained by receiving and decoding the Acquisition fragment 108 referred to by the service fragment 102.

When one fragment refers to another, the referring fragment must contain the IP of the referred fragment. That is, when the service fragment 102 refers to specific content, the service fragment 102 contains the ID of the referred Content fragment 106.

The ESG is transmitted to a receiver through a separate IP stream at a certain time, separately from an actual data stream. Accordingly, a service provider can transmit information, which a user must know before actually receiving a service, by using an ESG data model. In addition, the ESG may be used in various purposes in addition to a guide about programs.

The ESG may be transmitted through one IP stream, which is a single stream mode, or may be transmitted through more than one IP stream in a multi-stream mode when the amount of ESG data is large. In the use of the multi-stream mode, a rule for partitioning the fragments constituting an ESG into each IP stream is required. This rule denotes partitioning and allocating fragments into each IP stream in consideration of a relation among the fragments when a plurality of fragments exist. The rule is called "partitioning information" in a DVB system.

The partitioning information may include such information as time and a service ID. For example, when an ESG is transmitted using two IP streams, partitioning information may be set in such a manner that ESG data from the current time up to 12 hours after the current time is transmitted using a first IP stream, and ESG data after the 12 hours from the current time and up to 24 hours after the current time is transmitted using a second IP stream. In this case, the partitioning rule of each IP stream is time and their partitioning value is 12 hours. One or more partitioning rules may be used for an ESG, and ESG data partitioned according to the partitioning information is transmitted through each IP stream.

When the multi-stream mode is used, a receiver must acquire information about the number of IP streams used in order to transmit an ESG, and information about a partitioning rule used in the IP streams. Therefore, information about parameters used for the partitioning must be transmitted from a transmitter to a receiver.

When an ESG is transmitted using a partitioning rule, the ESG is constituted by ESG fragments, which are transmitted through an ESG container. The ESG container corresponds to a set of ESG fragments, includes one or more ESG fragments, and is transmitted together with headers describing the characteristics of each fragment. Accordingly, it is necessary to transmit initial information required when a receiver decodes ESG fragments transmitted through an ESG container, in which the initial information is transmitted through a separate container. The container for transmitting the initial information will be referred to as an "ESG INIT(INITialization)" container. The ESG INIT container includes a plurality of fields, among which a field for transmitting the partitioning information is referred to as a "partition declaration" field. When an ESG is transmitted using the multi-stream mode, a receiver can obtain information about each IP stream and about the partitioning rule and partitioning value used in each IP stream, through information provided by the partition declaration field.

Table 1 shows the contents and forms of a partition declaration field according to the Digital Video Broadcasting-Convergence of Broadcasting and Mobile Service (DVB-CBMS) Phase I ESG specification (ETSI TS 102 471).

**Table 1**

| Syntax | No of Bits | Mnemonic |
|---|---|---|
| ESG Session Partition Declaration{ | | |
| num field | 8 | uimsbf |
| Reserved | 8 | bslbf |
| for(K=0· k<num fields· k++) { | | |
| field identifier[k] | 16 | bslbf |
| field encoding[k] | 16 | bslbf |
| field length[k] | 8 | uimsbf |
| field overlan[k] | 1 | bslbf |
| Reserved | 7 | bslbf |
| } | | |
| n o IPStreams | 8 | |
| IPVersion6 | 1 | bslbf |
| Reserved | 7 | bslbf |
| for(i=0: i<n o IPStreams i++){ | | |
| IPStreamID | 8 | uimsbf |
| if (IP Version 6) { | | |
| ESG Source Address [i] | 128 | bslbf |
| IPAddress[i] | 128 | bslbf |
| }else{ | | |
| ESGSourceAddress [i] | 32 | bslbf |
| PAddress [i] | 32 | bslbf |
| } | | |
| Port [i] | 16 | Uimsbf |
| SessionID [i] | 16 | Uimsbf |
| for(k=0; k<num fields: k++) { | | |
| if (field lenght [k]==0){ | | |
| Length[i][k] | 8+ | yluimsbf8 |
| } | | |
| if(overlapping) { | | |
| start field value[i][k] | | Bslbf |
| } | | |
| End field value[i][k] | | Bslbf |
| nextByteBoundary () | | |
| } | | |
| } | | |

Table 2 shows the values of the "field_identifier" representing a partitioning rule, which is shown in Table 1.

**Table 2**

| Value | Encoding | Meaning |
|---|---|---|
| 0x00 | 0x0101 (unsigned short) | The number of hours for which the fragments are valid. This may be used to split the ESG into various schedule depths. |
| 0x01 | 0x0000(string) | The URI of the Service fragments ServiceID. This may be used to carry all fragments relevant to a particular service. |

According to Table 2, when the "field_identifier" has a value of "0x00," it denotes that a partitioning rule corresponds to "time". When the "start_field_value" has a value of "2" and the "end_field_value" has a value of "4" in Table 1, it denotes that ESG data regarding services from 2 hours later up to 4 hours later with respect to a specific time is transmitted through the current IP stream. In other example, when the "field_identifier" has a value of "0x01," it denotes that a partitioning rule corresponds to a "service ID", in which the partitioning value of a uniform resource identifier (URI) format having a Null as the last value is used in order to identify a service ID for ESG data of the current IP stream.

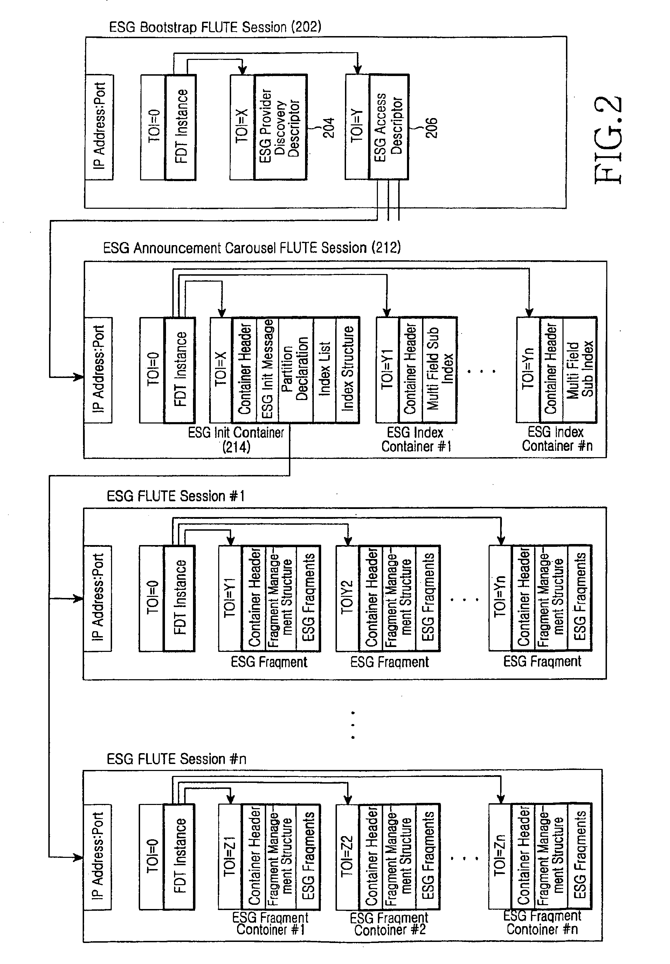

FIG. 2 illustrates the conventional transmission mechanism when an ESG is transmitted in the multi-stream mode.

A receiver identifies the IP address of an ESG Bootstrap FLUTE (File Delivery over Unidirectional Transport) session 202 from PSI/SI (Program Specific Information/Service Information), which is a control channel signal of a DVB-Handheld (DVB-H). The Bootstrap session functions to transmit fundamental information about an ESG, such as the ESG provider and an ESG list provided by the ESG provider. Such information is transmitted through an ESG Provider Discovery Descriptor 204 and an ESG Access Descriptor 206, in which is reported the IP address of an Announcement carousel FLUTE session 212 of each ESG. That is, one Announcement carousel session exists for each ESG, and functions to provide brief information about the transmission and structure of the corresponding ESG.

An ESG INIT container 214 transmitted through the Announcement carousel session 212 includes: an initialization message containing parameters related to compression methods of subsequent ESG containers; a partition declaration field containing such partitioning information as information of Table 1; and an index list, an index structure and multi-field sub-indexes, which are parameters representing information about the structure of an ESG that is divided into a plurality of IP streams and is then transmitted. That is, when one ESG is divided into a plurality of IP flows and is then transmitted, such information as a container list regarding ESG data carried through each IP flow, and a list of ESG fragments contained in each container, is transmitted through the ESG INIT container 214. Using such information, in fact, the receiver can identify how an ESG is divided and transmitted, without directly accessing a session in which the ESG is transmitted. The receiver obtains an IP address of a session in which ESG data is transmitted from the partition declaration field, accesses the session, receives containers of ESG fragments where ESG data is contained, and decodes all the received containers, thereby completing data of one ESG.

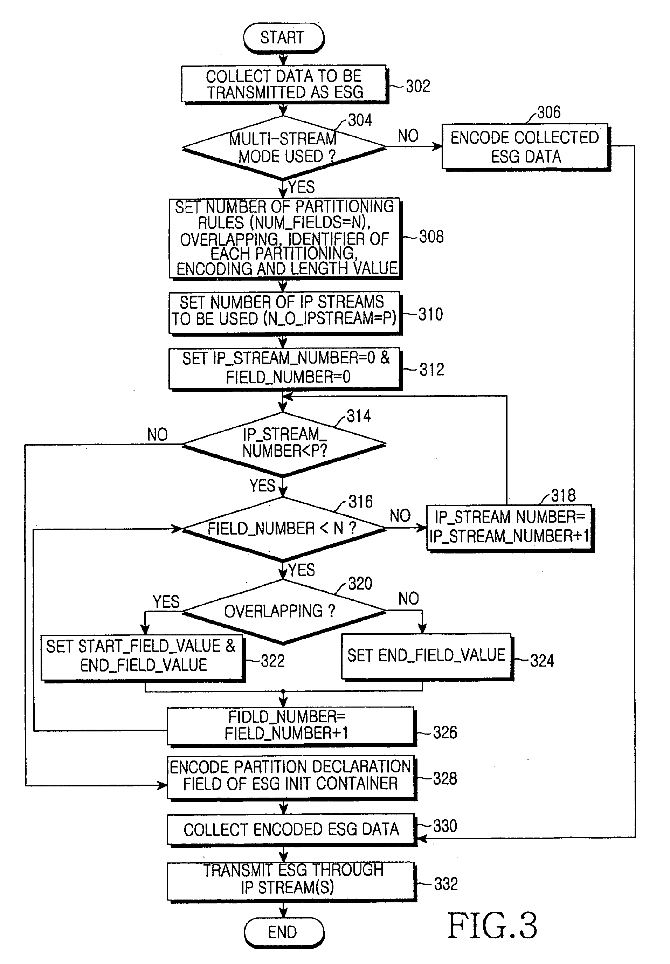

FIG. 3 illustrates the operation of a conventional transmitter for transmitting ESG data in the multi-stream mode.

The transmitter collects ESG data to be transmitted (step 302), and determines whether to use the multi-stream mode when transmitting the ESG data (step 304). When the transmitter determines not to use the multi-stream mode, the transmitter encodes the collected ESG data according to each type of data in step 306. In contrast, when the transmitter determines to use the multi-stream mode, the transmitter sets parameters necessary for the multi-stream mode in step 308. The parameters required for the use of the multi-stream mode include the number N of used partitioning rules (num_field), an overlapping parameter (field_overlap), a partitioning identifier (field_identifier) for a used partitioning rule, an encoding parameter (field_encoding) and a partitioning length (field_length).

The number of partitioning rules reports the number of used partitioning rules, the overlapping parameter reports the overlap or non-overlap of each partitioning, and the partitioning identifier reports rules used in each partitioning. The encoding parameter reports a scheme in which each partitioning value has been encoded, and the partitioning length reports the number of bytes of a field indicating each partitioning value. After setting the parameters, the transmitter sets the number (n_o_IPStream=P) of IP streams to transmit the ESG data (step 310).

Thereafter, in order to allocate ESG fragments to each IP stream, the transmitter initializes an IP_stream_number, which is an index for IP streams to be set, and a field_number, which is an index for partitioning rules to be set, to "0," respectively, in step 312. Then, the transmitter determines whether the IP_stream_number is less than the number P of IP streams (step 314). When the IP_stream_number is less than P, the transmitter determines whether the field_number is less than the number N of partitioning rules (step 316). When the field_number is less than N, the transmitter determines whether an overlapping exists in a partitioning rule to be used in the current IP stream based on the overlapping parameter in step 320. Then, the terminal sets only an end value "end_field_value" for the partitioning rule in step 324 if an overlapping does not exist in the partitioning rule, and sets both a start value "start_field_value" and an end value "end_field_value" for the partitioning rule in step 322, if an overlapping exists.

The start value and the end value correspond to partitioning values for the partitioning rule. For example, when the partitioning identifier has been set as "time," the start value and the end value inform the reference time in which fragments within each IP stream are partitioned. That is, fragments from a start time indicated by the start value to a end time indicated by the end value correspond to ESG data transmitted through the current IP stream.

If an overlapping does not exist in the partitioning rule, the transmitter sets only the end value without separately declaring a start value, for the start value is equal to "an end value of a previous IP stream + 1". When the setup of the start value and/or the end value has been completed, the transmitter increases the field_number by one in step 326 in order to set a start value and an end value for the next partitioning rule, and returns to step 316 in order to determine whether the field_number is less than the number N of used partitioning rules (num_field).

If the field_number is not less than the num_field N as a result of the determination in step 316, it means that the setup of the start value and end value for partitioning rules used in the current IP stream has been completed, so that the transmitter increases the IP_stream_number by one in order to set the start value and end value for partitioning rules used in the next IP stream (step 318), and returns to step 314 in order to determine whether the IP_stream_number is less than the P of the n_o_IPstream.

When the IP_stream_number is not less than the P of the n_o_IPstream as a result of the determination in step 314, it indicates that all the setup for IP streams to be used has been completed, and the transmitter encodes the partition declaration field within the ESG INIT container so that the partition declaration field contain the set values (step 328). Then, the transmitter collects all encoded ESG data including the partition declaration field of the ESG INIT container in step 330, and transmits the collected ESG data through P number of IP streams in step 332.

As described above, each partitioning rule can be used such that partitioning values overlap with each other when the partitioning rule is applied to a plurality of IP streams. That is, when a partitioning rule is applied to "time", a first IP stream is used to transmit service information from 2 hours later up to 12 hours later, and a second IP stream is used to transmit service information from between 10 and 18 hours later. In another example, it is possible to transmit ESG data for "one hour" through a first IP stream, to transmit ESG information for "one day" through a second IP stream, and to transmit ESG data for "one month" through a third IP stream to the user.

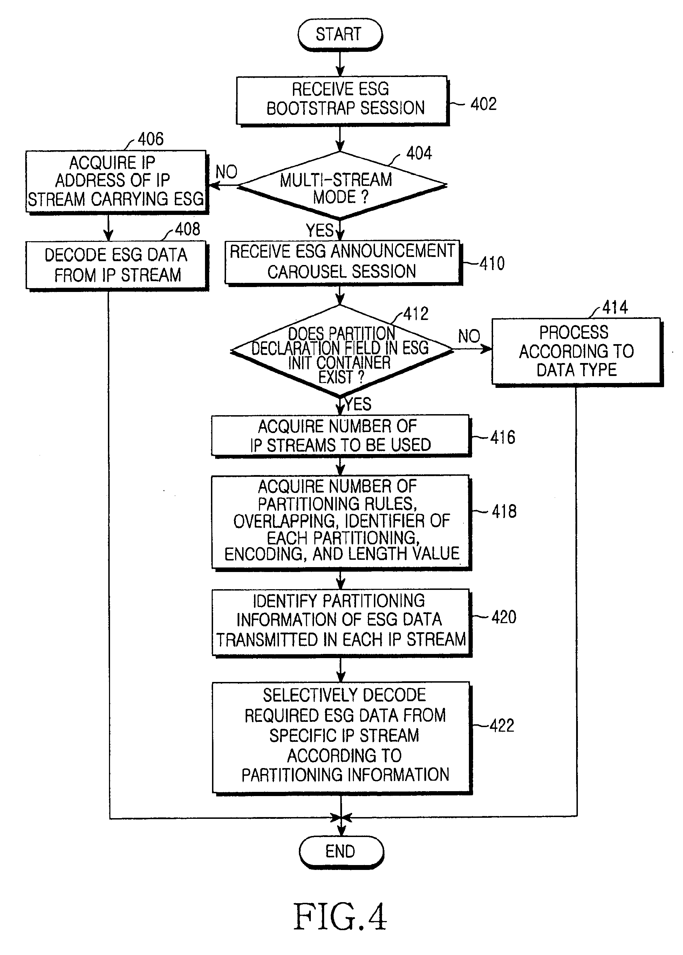

FIG. 4 illustrates the operation of a conventional receiver for receiving ESG data in the multi-stream mode.

First, the receiver receives ESG bootstrap data through an ESG bootstrap session in order to decode ESG data (step 402). The ESG bootstrap session is a session through which basic information is transmitted, wherein the basic information is required for the receiver to acquire information about at least one IP stream transmitting the ESG data. The IP address of the ESG bootstrap session is always fixed, and the receiver already knows the fixed IP address. Accordingly, when the receiver wants to decode ESG data, the receiver receives ESG bootstrap data including the basic information through the ESG bootstrap session before anything else. By making reference to the ESG bootstrap data, the receiver determines whether the ESG is transmitted in the multi-stream mode or in the single stream mode (step 404). When the single stream mode is used, the receiver acquires the IP address of the IP stream transmitting the ESG from the ESG bootstrap data (step 406), and then receives ESG data through the IP stream based on the acquired IP address and decodes the received ESG data (step 408).

In contrast, when the multi-stream mode is used, the receiver acquires the IP address of an ESG announcement carousel session from the ESG bootstrap data, and receives announcement carousel information including an ESG INIT container through the ESG announcement carousel session (step 410). The ESG announcement carousel session is for transmitting structural information about a plurality of IP streams carrying an ESG when the ESG is transmitted in the multi-stream mode, in which an ESG INIT container including structural information about the IP streams is transmitted through the ESG announcement carousel session.

The receiver attempts to find a partition declaration field from the ESG INIT container received through the ESG announcement carousel session (step 412). If the receiver cannot find the partition declaration field from the ESG INIT container, the receiver receives and properly processes ESG data according to a data type indicated by the ESG announcement carousel information (step 414). In contrast, when the receiver has found the partition declaration field from the ESG INIT container, the receiver acquires the number P of IP streams used for transmission of the ESG (step 416), and also acquires parameters required for the use of the multi-stream mode from the partition declaration field (step 418). The parameters required for the use of the multi-stream mode include the number N (num_fields=N) of partitioning rules, an overlapping parameter (field_overlap), each partitioning identifier (field_identifier), an encoding parameter (field_encoding), and a partitioning length (field_length), in which the definition of each parameter is the same as that described with reference to FIG. 3.

From the parameters, the receiver finds out partitioning information such as which partitioning rule is used in ESG data transmitted in each IP stream, and which IP stream is used to transmit fragments corresponding to each partitioning rule, in step 420. Then, the receiver selectively decodes required ESG data from a specific IP stream by using the partitioning information in step 422.

The term "selective demodulation" represents that the receiver decodes only a part of ESG data, instead of decoding all of the ESG data. For example, when the partitioning rule is time, an ESG fragment within 12 hours from the reference time is transmitted through a first IP stream, and an ESG fragment from between 12 and 24 hours later with respect to the reference time is transmitted through a second IP stream, the receiver can receive only one of the two IP streams and decode only the ESG data during a desired 12 hours according to its own reception performance, instead of decoding all the ESG data during 24 hours.

When the multi-stream mode is used in the prior art, a start value "start_field_value" and an end value "end_field_value," which correspond to each partitioning rule, are declared in every IP stream, in order to decode the partition declaration field of an ESG INIT container. Even when one or more partitioning rules are used, it is possible to set an ESG transmission scheme so that each IP stream can transmit only a fragment corresponding to a specific partitioning rule. For example, when four IP streams and two partitioning rules (e.g., time and service ID) are used, fragments for the first and second IP streams are distributed according to the time (first partitioning rule), and fragments for the third and fourth IP streams are distributed according to the service ID (second partitioning rule), so as to insert ESG data into each IP stream.

When an ESG is transmitted in the multi-stream mode using such partitioning rules, the following problems occur.

It is impossible to support scenarios such as dividing one ESG into a one-day , a one-week and a one-month ESG by means of a partitioning rule and transmitting the ESGs through a plurality of IP streams, classifying one-week ESG data into a sport ESG, a news ESG, and so on, and transmitting the classified ESGs. That is, when the conventional partitioning rules are used, it is impossible to define the operation of the receiver and partitioning information for ESG transmission as described above. In addition, when each piece of the ESG data is classified into separate ESGs and is then transmitted, it is necessary to separately define an ESG INIT container of an announcement carousel for each piece of the ESG data and to transmit the ESG INIT container to the receiver, which imposes a burden on the transmitter.

In detail, when ESG data is grouped into IP streams according to "service IDs" and is transmitted, the value of the "service ID" is set as a string value, so that the receiver cannot recognize how the services described in an ESG are grouped with only the string value. That is, when the "service ID" is used as a partitioning rule, the receiver cannot identify services existing between a start_field_value and an end_field_value. Therefore, the receiver must receive all ESG data through multiple IP streams and then configure one ESG by using the received ESG data, so that the receiver must give up the advantage of the multi-stream mode.

Also, when the partitioning rule "time" is used, the receiver cannot recognize an absolute time at which a corresponding service is provided, and can recognize only that each IP stream includes ESG data for a few hours with respect to a reference time (e.g., a time when an IP stream is transmitted). As a result, the receiver cannot recognize the absolute time of a corresponding service until the receiver recognizes the partitioning rule from an ESG INIT container of a announcement carousel session and receives and decodes all ESG data through multiple IP streams.

### SUMMARY OF THE INVENTION

Accordingly, the present invention has been made to solve the above-mentioned problems occurring in the prior art, and the present invention provides a method and apparatus for more efficiently transmitting ESG data using a multi-stream mode.

Also, the present invention provides a method and apparatus which configures a signaling field used to support a multi-stream mode in order to more efficiently transmit and decode ESG data using the multi-stream mode in a digital broadcasting system.

In addition, the present invention provides a method and apparatus which define various partitioning rules in order to transmit ESG data using a multi-stream mode, and efficiently notify a receiver of the partitioning rules in a digital broadcasting system.

In accordance with an aspect of the present invention, there is provided a method for transmitting an ESG in a digital broadcasting system, including collecting ESG data to be transmitted, setting a number of IP streams to transmit the ESG data in order to transmit the ESG data in a multi-stream mode, generating partitioning information used for each of the IP streams, the partitioning information including at least one partitioning rule to partition the ESG data into the IP streams and at least one partitioning value for each of the partitioning rule, in which the partitioning rule includes at least one among a service ID, a service genre, an absolute time, and a session type and a profiling type defined by a provider, and the at least one partitioning value includes at least one of a start value and an end value according to the partitioning rule, and transmitting the partitioned ESG data through the IP streams.

In accordance with an aspect of the present invention, there is provided a method for receiving an ESG in a digital broadcasting system, including receiving partitioning information for ESG data partitioned into and transmitted through a plurality of IP streams, the partitioning information including at least one partitioning rule to partition the ESG data into the IP streams and at least one partitioning value for each of the partitioning rule, in which the partitioning rule includes at least one among a service ID, a service genre, an absolute time, and a session type and a profiling type defined by a provider, and the at least one partitioning value includes at least one of a start value and an end value according to the partitioning rule; and selectively receiving desired ESG data through a specific IP stream carrying the desired partitioned ESG data of the ESG data, by means of the partitioning information.

In accordance with an aspect of the present invention, there is provided an apparatus for transmitting an ESG in a digital broadcasting system, the apparatus including an ESG generator for collecting ESG data and generating a plurality of ESG IP streams which include the ESG data; an IP encapsulator for receiving the ESG IP streams and/or data IP streams and encapsulating the received IP streams into a transmission stream; a multiplexer for receiving the transmission stream from the IP encapsulator, receiving TeleVision (TV) transmission streams, and multiplexing the received transmission streams; and a modulator for modulating and transmitting the transmission streams, which have been multiplexed by the multiplexer, through an antenna, wherein the ESG generator sets a number of the ESG IP streams in order to transmit the ESG data in a multi-stream mode, generates partitioning information used for each of the IP streams, the partitioning information including at least one partitioning rule to partition the ESG data into the ESG IP streams and at least one partitioning value for each of the partitioning rule, in which the partitioning rule includes at least one among a service ID, a service genre, an absolute time, and a session type and a profiling type defined by a provider, and the at least one partitioning value includes at least one of a start value and an end value according to the partitioning rule; and transmits the ESG data, which has been partitioned according to the partitioning information, through the IP streams.

In accordance with an aspect of the present invention, there is provided an apparatus for receiving an ESG in a digital broadcasting system, including a demodulator for demodulating a signal received through an antenna and outputting the demodulated signal, a demultiplexer for separating the demodulated data into IP-encapsulated packets and transmission streams, an IP decapsulator for decapsulating the IP-encapsulated packets so as to output a plurality of ESG IP streams and service data IP streams, an ESG processing unit for acquiring ESG data from the ESG IP streams; and a data processing unit for receiving the transmission streams and/or the service data IP streams and processing the received streams so that a user can recognize contents of the streams, wherein the ESG processing unit receives partitioning information for the ESG data partitioned into and transmitted through the ESG IP streams, the partitioning information including at least one partitioning rule to partition the ESG data into the IP streams and at least one partitioning value for each of the partitioning rule, in which the partitioning rule includes at least one among a service ID, a service genre, an absolute time, and a session type and a profiling type defined by a provider, and the at least one partitioning value includes at least one of a start value and an end value according to the partitioning rule, and selectively receives desired ESG data through a specific IP stream carrying the desired partitioned ESG data of the ESG data, by means of the partitioning information.

### BRIEF DESCRIPTION OF THE DRAWINGS

The above and other aspects, features and advantages of the present invention will be more apparent from the following detailed description taken in conjunction with the accompanying drawings, in which:
FIG. 1 illustrates an ESG data model of a conventional DVB system;
FIG. 2 illustrates the conventional transmission mechanism when ESG data is transmitted in a multi-stream mode;
FIG. 3 illustrates the operation of a conventional transmitter for transmitting ESG data in the multi-stream mode;
FIG. 4 illustrates the operation of a conventional receiver for receiving ESG data in the multi-stream mode;
FIGs. 5A and 5B illustrate the operation of a transmitter which transmits ESG data in the multi-stream mode according to a first embodiment of the present invention;
FIG. 6 illustrate the operation of the receiver which receives ESG data in the multi-stream mode according to the first embodiment of the present invention;
FIG. 7 illustrates a transmission format of a service ID list according to a second embodiment of the present invention;
FIGs 8A and 8B illustrate the operation of a transmitter which additionally transmits a service ID list through an ESG INIT container according to the second embodiment of the present invention;
FIG. 9 illustrate the operation of the receiver which receives an ESG INIT container including a service ID list according to the second embodiment of the present invention;
FIG. 10 illustrates the configuration of a transmitter according to the present invention; and
FIG. 11 illustrates the configuration of a receiver according to the present invention.

### DETAILED DESCRIPTION OF THE EXEMPLARY EMBODIMENTS

Preferred embodiments of the present invention will be described with reference to the accompanying drawings. In the following description, a detailed description of known functions and configurations incorporated herein will be omitted for the sake of clarity and conciseness. Terms described in the following description are defined by considering functions thereof, so they may vary according to users, operator's intention, or custom. Accordingly, the terms must be defined based on the entire contents of the present application.

The aspect of the present invention described below is to transmit ESG data for providing information about each broadcast service in a digital broadcasting system, and particularly to enable ESG data to be more efficiently transmitted and received in a multi-stream mode.

In the following description, the present invention will be explained in detail with reference to a DVB system. However, the aspect of the present invention may be applied to other types of systems having similar technological background and similar channel types only with slight modification without departing from the scope of the present invention, which can be understood by one skilled in the art.

In detail, the present invention discloses new partitioning rules in transmitting ESG data in a multi-stream mode. In addition, according to the present invention, a service ID list is transmitted to a terminal (i.e., a receiver) in order to efficiently use a partitioning rule of a service ID. The receiver requests an input of the user by means of a description field for new partitioning rules before receiving ESG data transmitted in a multi-stream mode, and selectively decodes ESG data according to the request. The following new partitioning rules may be individually or concurrently used.

According to a first embodiment of the present invention, new partitioning rules shown in Table 3A are disclosed in order to solve the aforementioned problems existing in the prior art.

**Table 3A**

| Value | Encoding | Meaning |
|---|---|---|
| 0x00 | 0x0101(unsigned short) | The number of hours for which the fragments are valid. This may be used to split the ESG into various schedule depths. |
| 0x01 | 0×0000(string) | The URI of the Service fragments ServiceID. This may be used to carry all fragments relevant to a particular service. |
| 0x10 | 0x0000(string) | The ServiceGenre value. |
| 0x20 | 0x0400(DateTime) | The date and time value for which the fragments are valid. |
| 0x30~ | 0x0101(unsigned short) | The Profiling Type. |
| 0x40~ | 0x0101 (unsigned short) | The Session Type. |
| 0×50 | 0x0101 (unsigned short) | Notification |

A first new partitioning rule is "ServiceGenre" shown in Table 3A, and its encoding type is "string." In the following description, the value of a field_identifier is expressed as "0×10," but may be expressed differently. The "ServiceGenre" has the same field type and value as those of a "ServiceGenre" element within a service fragment of an ESG, and its detailed specification is based on ESG specification "ETSI TS 102 471." When the field_identifier of a partitioning rule indicates the "ServiceGenre," it indicates that service-related information corresponding to a specific service genre is transmitted through a specific IP stream, in which the partitioning rule is applied, and a start_field_value and an end_field_value have an equal value.

A second partitioning rule is "DateTime" shown in Table 3A, and its encoding type is based on a "'Modified Julian Date and Milliseconds" format defined in DVB-H ESG specification "ETSI TS 102 471." A time stamp having an "unsigned long" format may be used for the "DateTime." An encoding type available for the time stamp can be selected from Table 8.4 in the DVB-H ESG specification "ETSI TS 102 471," and is shown in Table 3B below. When the partitioning rule of "DateTime" is used, it is possible to more efficiently express time information about broadcast services, as compared with the existing method in which the time information is expressed only as relative time, such as one hour or two hours. The second new partitioning rule uses an absolute time, so itis also referred to as an "Absolute Time" rule.

**Table 3B (Encoding Type)**

| field encoding | Description | Encoding | Size in bits |
|---|---|---|---|
| 0x0000 | string type | Null-terminated string | variable (8+) |
| 0x0001 - 0x00FF | Reserved for custom string types | | |
| 0x0100 | signed short | two's complement - Big-Endian | 16 |
| 0x0101 | unsigned short | unsigned binary - Big-Endian | 16 |
| 0x0102-0x01 FF | Reserved for custom 2 types | | 16 |
| 0x0200 | | two's complement-Big-Endian | 32 |
| 0x0201 0×0201 | unsigned long | unsigned binary - Big-Endian | 32 |
| 0x0202 | Variable length signed integer | one bit to indicate sign (0: positive, 1: negative), followed by abs(value) using vluimsbf5. | variable (6+) |
| 0x0203 | variable length unsigned integer | vluimsbf8 | variable (8+) |
| 0x0204 | Boolean | 0:False 1:True | 8 |
| 0x0205 | signed byte | two's complement | 8 |
| 0x0206 | unsigned byte | unsigned binary | 8 |
| 0x0207-0x02FF | Reserved for custom integer types | | |
| 0x0300 | signed float | IEEE standard 754-1985 [16]Big-Endian | 32 |
| 0x0301 | Reserved | | |
| 0x0302 | signed double | IEEE standard 754-1985 [16]Big-Endian | 64 |
| 0x0303-0x03FF | Reserved for custom rational types | | |
| 0x0400 | date Time | Modified Julian Date and Milliseconds (TVA BiM codec, clause 4.4.2.4.2 in [21]) | 64 |
| 0x0401 | Date | Modified Julian Date (TVA BiM codec, clause 4.4.2.4.3 in [21]) | 32 |
| 0x0402-0x04FF | Reserved for custom binary fragments | | |
| 0x0500-0xFFFF | Reserved for future use | | |

A third new partitioning rule is "Profiling Type," detailed values of which are defined in Table 3C below. The "Profiling Type" may be defined as a "basic profile" or an "enhanced profile," according to encoding values. The term "basic profile" represents the most basic ESG information (i.e., accessing information, such as a service ID and an IP address) provided to the user through an ESG, and generally corresponds to information provided as "Mandatory" information through an ESG. Although it is not mandatory, principal information such as free-to-air information which the user wants to basically know first corresponds to the basic ESG information, and the definition of such principal information is made by providers. The term "enhanced profile" represents ESG data other than the "basic profile" data. By introducing such a profiling concept into ESG transmission, the receiver can first receive ESG data through the IP session of a "basic profiling," and can rapidly show the user the basic ESG information.

**Table 3C (Values of Profiling Type)**

| Value | Meaning |
|---|---|
| 0x30 | Basic profile |
| 0x31 | Enhanced profile |
| 0x32 | Reserved |

According to the existing partitioning rule, a range of ESG data transmitted through each IP stream is expressed by using a "start_field_value" and an "end_field_value." For example, when using "Time" as a partitioning rule, and the "start_field_value" is 1 and the "end_field_value" is 2 in a first IP stream, it indicates that ESG data corresponding to a range between one and two hours later is transmitted through the first IP stream. However, when the partitioning rule corresponds to "Profile Type," such range values cannot be used. Therefore, the "start_field_value" is not used, and the "end_field_value" is set as one of the values shown in Table 3C, thereby indicating a corresponding profile type. That is, when the partitioning rule corresponds to "Profile Type," the receiver checks the "end_field_value" so as to identify the corresponding profile type.

A fourth new partitioning rule is "Session Type." Detailed type values thereof are disclosed in Table 3D below. That is, when the partitioning rule is "Session Type," and a type value thereof is, for example, "0×00," it indicates that SDP information about ESG data is transmitted through a corresponding IP stream. When the "Session Type" is used as a partitioning rule, the "start_field_value" is not used because there is no overlapping between ranges, and the "end_field_value" is set as one of the values shown in Table 3D, thereby indicating a corresponding profile type. That is, when the partitioning rule is "Session Type," the receiver checks the "end_field_value" so as to identify the corresponding profile type.

The "Session Type" illustrated in Table 3D below can indicate a notification message for notifying a terminal of a change in a broadcast service and/or system, as well as an SDP. A notification message indicated by the "Session Type," as described above, corresponds to a general notification message displayed to all users. That is, by using a multi-stream mode of an ESG, it is possible to transmit channel information about an IP stream, through which the general notification message is transmitted, and the general notification message itself, from the transmitter to multiple receivers.

**Table 3D (Session Type)**

| Value | Meaning |
|---|---|
| 0x40 | SDP |
| 0x41 | Notification |
| 0x42 | Reserved |

In another example, as shown in "0×50" of Table 3A, transmission of a notification message may be expressed in the same manner as those used for the partitioning rules. In other words, a transmission scheme of a notification message may be expressed either by one of the Session Types as shown in Table 3D, or by one of the partitioning rules as shown in Table 3A.

Hereinafter, the operations of a transmitting side and a receiving side according to the first embodiment of the present invention, and relevant supplementary information will be described.

When the "DateTime" or "ServiceGenre" is used as a partitioning rule according to the first embodiment of the present invention, the operation of a receiver using corresponding information is changed. When the partitioning rules disclosed in the present invention are applied, ESG data can be partitioned into an ESG for such parameters as the July 12, 2006, the third week of July, 2006, sports and news, in which the partitioned information becomes useful for the user as well as for the receiver. When an original ESG including one-week information is either partitioned day by day and transmitted through multiple IP streams, or is partitioned "ServiceGenre" by "ServiceGenre" and transmitted through multiple IP streams, it is possible for the transmitter to notify the user of partition information before the receiver receives ESG partitions of the IP streams, and it is possible for the receiver either to first receive only a desired ESG partition according to the partition information or to selectively receive the ESG partitions. In this case, there are gains in terms of the time required for receiving the ESG and the processing power of the receiver.

When an ESG partitioned as described above is transmitted as multiple ESGs, new pieces of ESG announcement carousel information are set and transmitted at each ESG session, which is inefficient. For this reason, the present invention defines a description field for additionally notifying the user of partitioning rules. Although the partitioning rules may be reported to the user by modifying information basically provided as partitioning rules, the description field enables information of a more proper form to be provided to the user. The description field is optional.

When the description field is used, it is possible for a terminal to receive corresponding information through the description field and to query the user about which ESG data the terminal must receive first of all. In another example, a terminal may apply a new partitioning rule without querying the user.

Table 4 below shows the syntax of a partition declaration field which includes a description field for additionally notifying the user of the partitioning rules according to the first embodiment of the present invention.

**Table 4**

| Syntax | No. of Bits | Mnemonic |
|---|---|---|
| ESG Session Partition Declaration{ | | |
| num_fields | 8 | uimsbf |
| Reserved | 8 | bslbf |
| for(k=0; k<num_fields; k++) { | | |
| field_identifier[k] | 16 | bslbf |
| field_encoding[k] | 16 | bslbf |
| field_length[k] | 8 | uimsbf |
| field_overlap[k] | 1 | bslbf |
| Reserved | 7 | bslbf |
| } | | |
| N_o_IPStreams | 8 | |
| IPVersion6 | 1 | bslbf |
| Reserved | 7 | bslbf |
| for(i=0; i<n_o_IPStreams; i++) { | | |
| IPStreamID | 8 | uimsbf |
| if(IPVersion6) { | | |
| ESGSourceAddress[i] | 128 | bslbf |
| IPAddress[i] | 128 | bslbf |
| } else { | | |
| ESGSourceAddress[i] | 32 | bslbf |
| IPAddress[i] | 32 | bslbf |
| } | | |
| Port[i] | 16 | uimsbf |
| SessionID[i] | 16 | uimsbf |
| **Description[i]** | | |
| for(k=0; k<num_fields; k++) { | | |
| if(field_length[k]=0){ | | |
| length[i] [k] | 8+ | vluimsbf8 |
| } | | |
| if(overlapping) { | | |
| start_field_value [i] [k] | | bslbf |
| } | | |
| end_field_value[i][k] | | bslbf |
| nextByteBoundary() | | |
| } | | |
| } | | |

Referring to Table 4, the use of any one of the "start_field_value" and "end_field_value" is sufficient, unless an overlapping exists between the ranges of a partitioning rule (i.e., when overlapping=FALSE). Therefore, the "end_field_value" is set as one of partitioning values based on a corresponding partitioning rule. In detail, the partitioning value for the aforementioned "Profiling Type" and "Session Type" is one of the "start_field_value" and "end_field_value," that is, the "end_field_value."

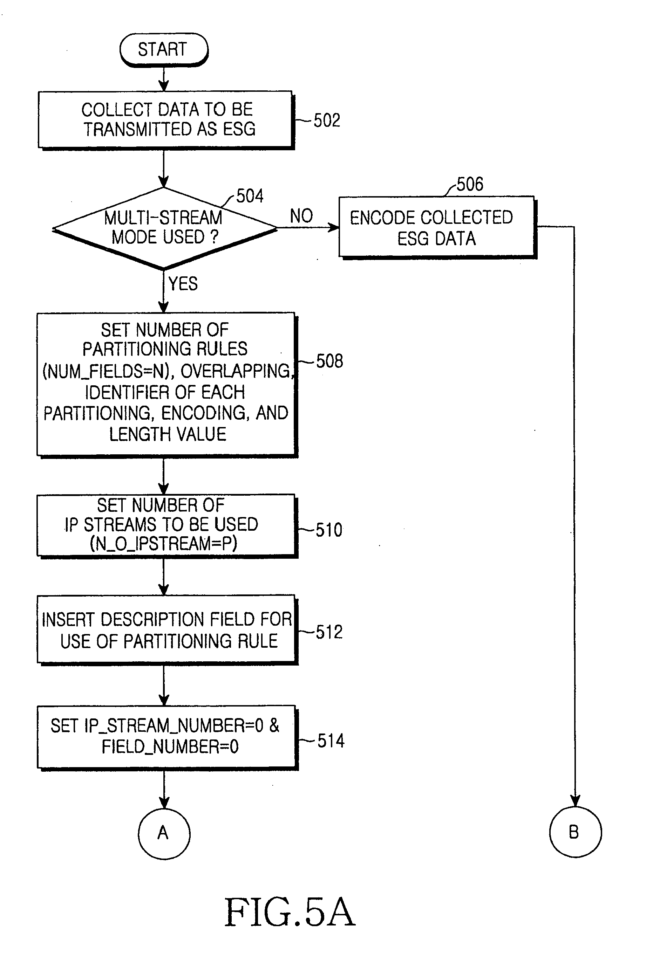

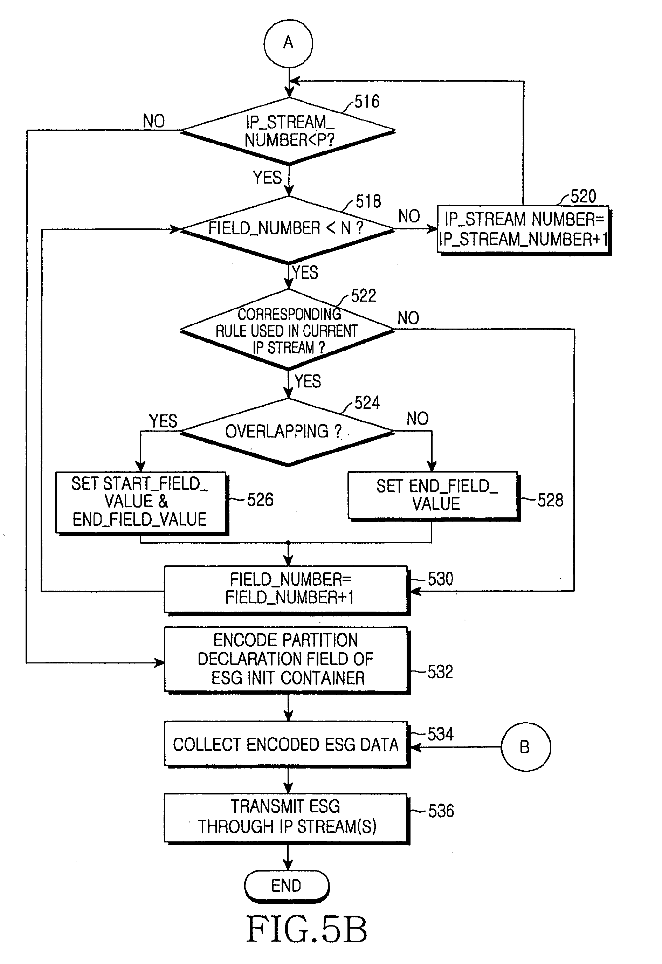

FIGs. 5A and 5B illustrate the operation of a transmitter according to the first embodiment of the present invention.

The transmitter collects ESG data including ESG fragments to be transmitted (step 502), and determines whether to use the multi-stream mode when transmitting the ESG data (step 504). When the transmitter determines not to use the multi-stream mode, the transmitter encodes the collected ESG data according to each type of data in step 506, and then proceeds to step 534. In contrast, when the transmitter determines to use the multi-stream mode, the transmitter sets parameters to be transmitted (step 508). The parameters required for the use of the multi-stream mode include the number of used partitioning rules (num_field=N), an overlapping parameter (field_overlap), a partitioning identifier (field_identifier) for a used partitioning rule, an encoding parameter (field_encoding), and a partitioning length (field_length). The functions of the parameters are the same as those described with reference to FIG. 3.

After setting the parameters, the transmitter sets the number (n_o_IPStream=P) of IP streams to transmit the ESG data (step 510). After setting the number of IP streams, the transmitter determines whether a partitioning rule is used in each IP stream, determines a used partitioning rule, inserts the determined information into a field_identifier[i] of a partition declaration field, and inserts a description field for notifying the user of the partitioning rule into the partition declaration field of an ESG INIT container (step 512).

Thereafter, in order to allocate ESG fragments to each IP stream, the transmitter initializes an IP_stream_number, which is an index for IP streams to be set, and a field_number, which is an index for partitioning rules to be set, to "0," respectively, in step 514. Then, the transmitter determines whether the IP_stream_number is less than the number P of IP streams (step 516). When the IP_stream_number is less than P, the transmitter determines whether the field_number is less than the number N of partitioning rules (step 518).

When the field_number is less than N, the transmitter determines whether a partitioning rule corresponding to the field_number is used in the current IP stream corresponding to the IP _stream_number (step 522). When the partitioning rule is not used in the current IP stream, the transmitter increases the value of the field_number by one in order to perform a determination operation with respect to the next partitioning rule (step 530), and returns to step 518, in which the transmitter again determines whether the field_number is less than "N." In contrast, when the partitioning rule is used in the current IP stream, the transmitter determines whether an overlapping exists in the partitioning rule to be used in the current IP stream according to the overlapping parameter (step 524). Then, the terminal sets only an end value "end_field_value" for the partitioning rule in step 528 if an overlapping does not exist in the partitioning rule, and sets both a start value "start_field_value" and an end value "end_field_value" for the partitioning rule in step 526 if an overlapping exists.

The start value and the end value correspond to partitioning values for the partitioning rule. For example, when the partitioning identifier has been set as "time," the start value and the end value inform the reference time in which fragments within each IP stream are partitioned. That is, fragments from a start time indicated by the start value to a end time indicated by the end value correspond to ESG data transmitted through the current IP stream.

In another example, when the partitioning identifier has been set as "DateTime" disclosed in the present invention, the start value and end value inform the absolute time at which IP streams are partitioned. Since the partitioning rule "DateTime" expresses the start value and end value as absolute time differently from the existing partitioning rule "Time," the receiver can recognize that ESG data corresponds to service information of a certain time point, even without decoding the ESG data. In still another example, when the partitioning identifier has been set as "ServiceGenre" disclosed in the present invention, the start value and end value correspond to values indicating the same specific service genre, and ESG data transmitted through a corresponding IP stream corresponds to service information belonging to the specific service genre.

If an overlapping does not exist in the partitioning rule, a start value is not separately declared, for the start value is equal to "an end value of a previous IP stream + 1." When the setup of the start value and/or the end value has been completed, the transmitter increases the field_number by one in step 530 in order to set a start value and an end value for the next partitioning rule, and returns to step 518 in order to determine whether the field_number is less than the number N of used partitioning rules (num_field).

If the field_number is not less than the num_field N as a result of the determination in step 518, it indicates that the setup of the start value and end value for partitioning rules used in the current IP stream has been completed, so that the transmitter increases the IP_stream_number by one in order to set the start value and end value for partitioning rules used in the next IP stream (step 520), and returns to step 516 in order to determine whether the IP_stream_number is less than the P of the n_o_IPstream.

When the IP_stream_number is not less than the P of the n_o_IPstream as a result of the determination in step 516, it indicates that the setup for all IP streams to be used has been completed, so that the transmitter encodes the partition declaration field within the ESG INIT container so that the partition declaration field contain the set values (step 532). Then, the transmitter collects all encoded ESG data which includes an ESG INIT container containing the partition declaration field in step 534, and transmits the collected ESG data to the receiver through P number of IP streams in step 536. In this case, the ESG data is partitioned according to the partitioning rules and partitioning values of each IP stream, and is then inserted into the IP streams.

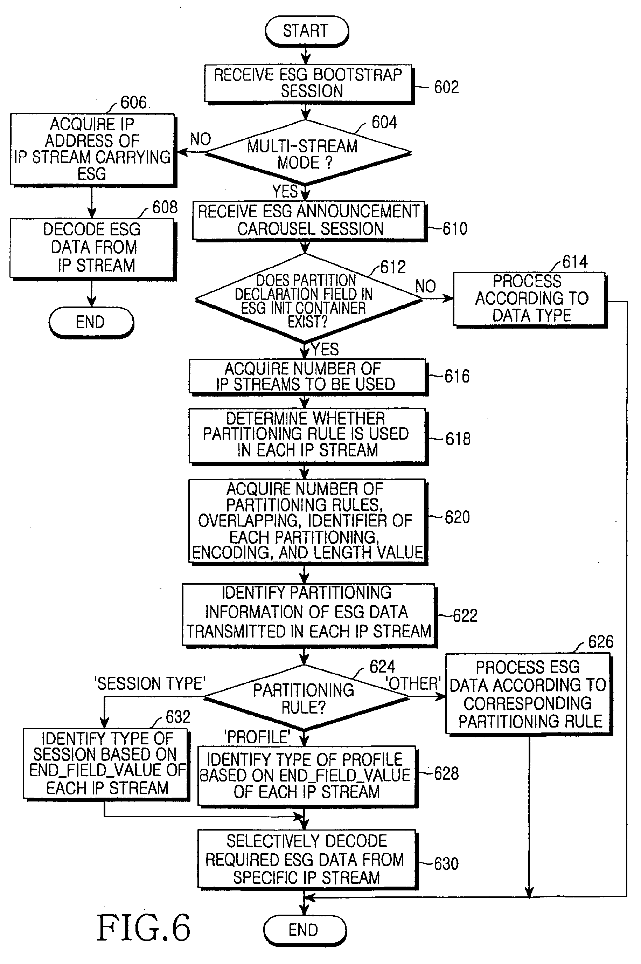

FIG. 6 illustrates the operation of the receiver according to the first embodiment of the present invention. In the following description, the operation of querying the user in order to receive ESG data desired by the user will be omitted. Hereinafter, a detailed description about the "Session Type" and "Profile Type," which correspond to partitioning rules not using the "start_field_value," will be given.

Referring to FIG. 6, the receiver receives ESG bootstrap data through an ESG bootstrap session in order to decode ESG data (step 602). The ESG bootstrap session is a session through which basic information required for the receiver to acquire information about an IP stream transmitting the ESG data is transmitted. The IP address of the ESG bootstrap session is always fixed, and the receiver already knows the fixed IP address. Accordingly, when the receiver wants to decode ESG data, the receiver receives ESG bootstrap data including the basic information through the ESG bootstrap session before anything else.

By making reference to the ESG bootstrap data, the receiver determines whether the ESG is transmitted in the multi-stream mode or in the single stream mode (step 604). When the single stream mode is used, the receiver acquires the IP address of the IP stream transmitting the ESG from the ESG bootstrap data (step 606), then receives ESG data through the IP stream based on the acquired IP address, and decodes the received ESG data (step 608).

In contrast, when the multi-stream mode is used, the receiver acquires the IP address of an ESG announcement carousel session from the ESG bootstrap data, and receives announcement carousel information including an ESG INIT container through the ESG announcement carousel session (step 610). The ESG announcement carousel session is for transmitting structural information about a plurality of IP streams carrying an ESG when the ESG is transmitted in the multi-stream mode, in which an ESG INIT container including structural information about the IP streams is transmitted through the ESG announcement carousel session.

The receiver attempts to find a partition declaration field from the ESG INIT container received through the ESG announcement carousel session (step 612). If the receiver cannot find the partition declaration field from the ESG INIT container, the receiver receives and properly processes ESG data according to a data type indicated by the ESG announcement carousel information (step 614). In contrast, when receiver has found the partition declaration field from the ESG INIT container, the receiver acquires the number P of IP streams used for transmission of the ESG (step 616). When acquiring the number P of IP streams, the receiver determines whether partitioning is used in each IP stream by referencing the partition declaration field (step 618).

After determining whether partitioning is used, the receiver acquires parameters required for the use of the multi-stream mode from the partition declaration field (step 620). The parameters required for the use of the multi-stream mode include the number (num_fields=N) of partitioning rules, an overlapping parameter, each partitioning identifier, an encoding parameter and a partitioning length. From the parameters, the receiver finds out partitioning information regarding which partitioning rule is used in ESG data transmitted in each IP stream, which IP stream carries fragments corresponding to each partitioning rule, etc., in step 622. Then, the receiver determines whether a partitioning rule used in each IP stream corresponds to "Profile Type" or "Session Type" by checking the partitioning information (step 624). When at least one first IP stream does not use one of the "Profile Type" and "Session Type" as a partitioning rule, the receiver processes (i.e., receives and decodes) ESG data of the first IP stream according to a corresponding partitioning rule (step 626).

At least one second IP stream using the "Profile Type" as a partitioning rule does not use a "start_field_value", for an overlapping does not exist between partition ranges (overlapping=FALSE in Table 4). Therefore, the receiver checks an "end_field_value" for the "Profile Type" so as to recognize one of profile-type values shown in Table 3C (step 628), and then proceeds to step 630. That is, the receiver already knows that the "end_field_value" of the second IP stream using the "Profile Type" as a partitioning rule represents a profile-type value. The receiver recognizes information regarding a specific IP stream which carries basic ESG information for broadcast service according to the profile-type value, already acquires the basic ESG information through the specific IP stream, and rapidly displays the basic ESG information for the user (step 630).

At least one third IP stream using the "Session Type" as a partitioning rule does not use a "start_field_value", for an overlapping does not exist between partition ranges (overlapping=FALSE in Table 4). Therefore, in this case, the receiver checks an "end_field_value" for the "Session Type" so as to recognize one of session-type values shown in Table 3D (step 632), and then proceeds to step 630. When the session-type value indicates an "SDP," the receiver can recognize that the second IP stream transmits SDP information about ESG data. Although it is not detailed in the accompanying drawings, when the "Session Type" and "DateTime" are doubly used as partitioning rules, and the session-type value indicates an "SDP," the receiver can recognize that a corresponding SDP is applied from a specific time (e.g., August 16, 2006) indicated by the "DateTime." In addition, when a "Session Type" for a specific IP stream indicates a notification message, the receiver recognizes a general notification message to be transmitted through the IP stream, and receives the general notification message through the IP stream.

When confirming a used partitioning rule and at least one corresponding partitioning value according to each IP stream, the receiver identifies an IP stream carrying desired ESG data, and selectively receives the desired ESG data through the IP stream (step 630). In this case, the receiver may query the user about whether to select and receive any one of ESG data transmitted through a plurality of IP streams by using a description field for a partitioning rule selectively provided through a partition declaration field or by using the partitioning information. For example, the receiver may selectively receive one-week's ESG data or sports-related ESG data according to the input of the user. Also, the receiver may first receive and decode an IP stream carrying ESG data of a specific part, such as a specific service or a specific service genre, based on user's preference pre-stored in the receiver, without directly requesting an input of the user. When the user selects a specific part of an ESG stream in response to the request of the receiver, the receiver receives and decodes ESG data desired according to the user's selection before everything.

In the second embodiment of the present invention, a more detailed operation between a receiver and a service provider is defined to apply "service ID" as a partitioning rule. In order to apply the "service ID" as a partitioning rule, the receiver must have known service IDs between a "start_field value" and an "end_field_value" so as to identify how service-by-service-related information is transmitted according to each IP stream. Since the service ID is transmitted as a string value, it is necessary to convert the string values of each service ID into an integer value in order to group all service IDs of an ESG into multiple IP streams.

Although the service IDs are converted into integer values, the receiver must hold a service ID list before receiving ESG data, in order to recognize service ID values between a "start_field_value" and an "end_field_value." Using the service ID list, the receiver can recognize grouping of service ID values and which IP stream carries ESG data for services of a specific range.

For this end, according to the second embodiment of the present invention, a service ID list is inserted into the ESG INIT container of an ESG announcement carousel session shown in FIG. 2, and thus is transmitted together with the ESG INIT container.

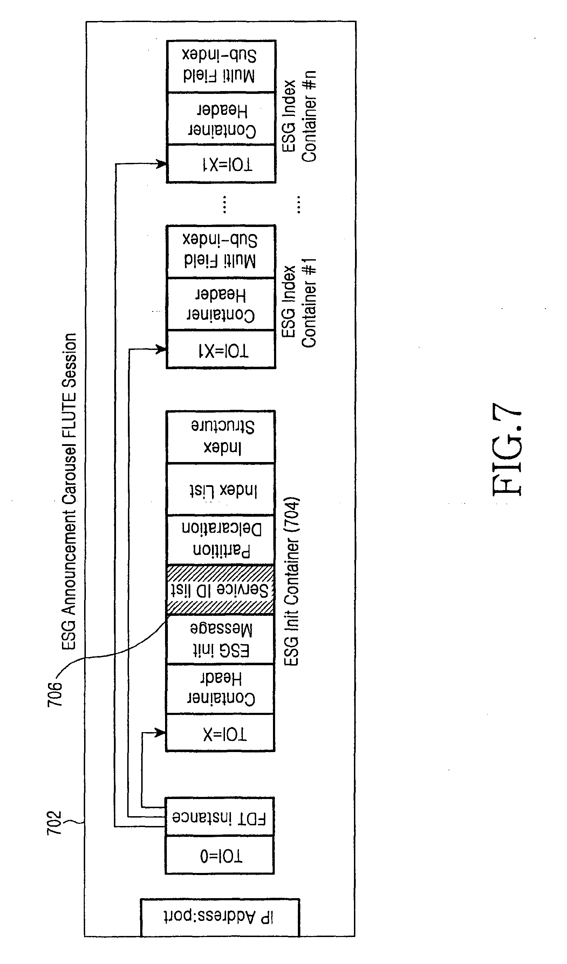

FIG. 7 is a transmission format of a service ID list according to the second embodiment of the present invention.

An ESG INIT container 704 of an ESG announcement carousel session 702 shown in FIG. 7 further includes a service ID list 706, as compared with that shown in FIG. 2. The service IDs and forms thereof used in the service ID list 706 are based on the values and forms used in an ESG and partitioning rules. The position of the service ID list 706 shown in FIG. 7 may be changed within the ESG INIT container 704.

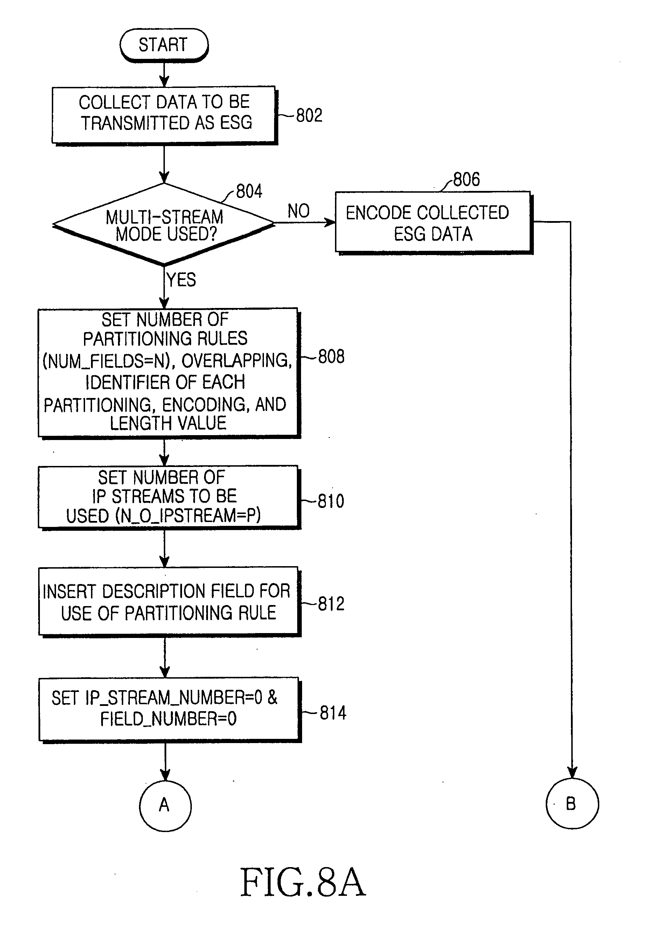

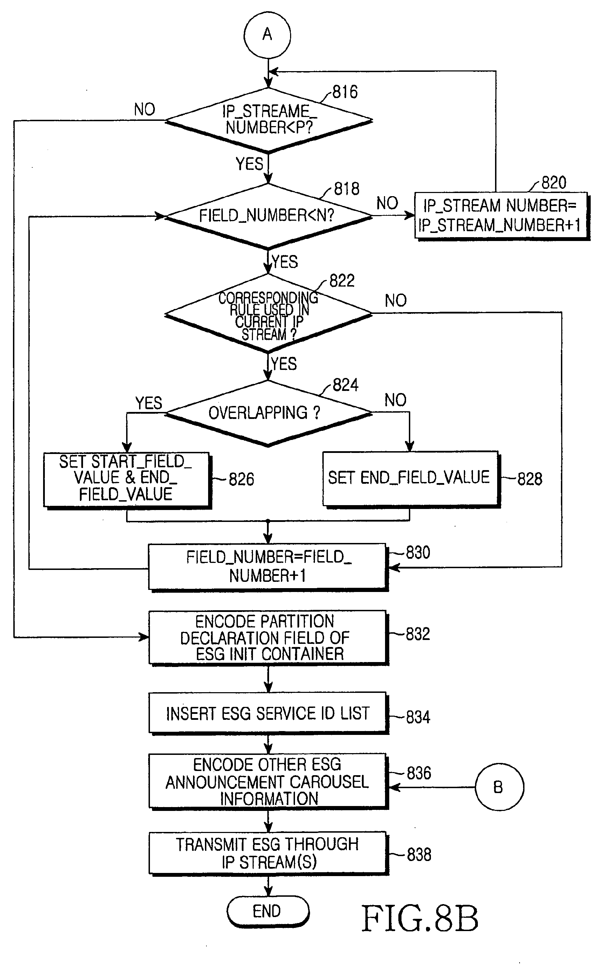

FIGs 8A and 8B illustrate the operation of a transmitter according to the second embodiment of the present invention.

The transmitter collects ESG data including ESG fragments to be transmitted (step 802), and determines whether to use the multi-stream mode when transmitting the ESG data (step 804). When the transmitter determines not to use the multi-stream mode, the transmitter encodes the collected ESG data according to each type of data in step 806, and then proceeds to step 836. In contrast, when the transmitter determines to use the multi-stream mode, the transmitter sets parameters to be transmitted (step 808). The parameters required for the use of the multi-stream mode include the number of used partitioning rules (num_field=N), an overlapping parameter, a partitioning identifier (field_identifier) for a used partitioning rule, an encoding parameter (field_encoding), and a partitioning length (field_length). The functions of the parameters are the same as those described with reference to FIG. 3.

After setting the parameters, the transmitter sets the number (n_o_IPStream=P) of IP streams to transmit the ESG data (step 810). After setting the number of IP streams, the transmitter determines whether a partitioning rule is used in each IP stream, determines a used partitioning rule, and inserts a description field representing the determined partitioning rule into a partition declaration field of an ESG INIT container (step 812).

Thereafter, in order to allocate ESG fragments to each IP stream, the transmitter initializes an IP_stream_number, which is an index for IP streams to be set, and a field_number, which is an index for partitioning rules to be set, to "0," respectively, in step 814. Then, the transmitter determines whether the IP_stream_number is less than the number P of IP streams (step 816). When the IP_stream_number is less than P, the transmitter determines whether the field_number is less than the number N of partitioning rules (step 818).

When the field_number is less than N, the transmitter determines whether a partitioning rule corresponding to the field_number is used in the current IP stream corresponding to the IP_stream_number (step 822). When the partitioning rule is not used in the current IP stream, the transmitter increases the value of the field_number by one in order to perform a determination operation with respect to the next partitioning rule (step 830), returns to step 818, in which the transmitter again determines whether the field_number is less than "N." In contrast, when the partitioning rule is used in the current IP stream, the transmitter determines whether an overlapping exists in the partitioning rule to be used in the current IP stream according to the overlapping parameter (step 824). Then, the terminal sets only an end value "end_field_value" for the partitioning rule in step 828 if an overlapping does not exist in the partitioning rule, and sets both a start value "start_field_value" and an end value "end_field_value" for the partitioning rule in step 826 if an overlapping exists.

The start value and the end value correspond to partitioning values for the partitioning rule. For example, when the partitioning identifier has been set as "time," the start value and the end value inform the reference time in which fragments within each IP stream are partitioned. That is, fragments from a start time indicated by the start value to a end time indicated by the end value (end_field_value) correspond to ESG data transmitted through the current IP stream. In another example, when the partitioning identifier has been set as "service ID," the start value and end value inform service IDs into which fragments within each IP stream are partitioned. That is, ESG fragments from a service ID indicated by the start value to a service ID indicated by the end value correspond to ESG data transmitted through the current IP stream.

In still another example, when the partitioning identifier has been set as "DateTime" disclosed in the present invention, the start value and end value inform an absolute time at which each IP stream is partitioned. Since the partitioning rule "DateTime" expresses the start value and end value as absolute time, differently from the existing partitioning rule "Time," the receiver can recognize that ESG data corresponds to service information of a certain time point, even without decoding the ESG data. In still another example, when the partitioning identifier has been set as "ServiceGenre" disclosed in the present invention, the start value and end value correspond to values indicating the same specific service genre, and ESG data transmitted through a corresponding IP stream corresponds to service information belonging to the specific service genre.

If an overlapping does not exist in the partitioning rule, a start value is not separately declared, for the start value is equal to "an end value of a previous IP stream + 1." When the setup of the start value and/or the end value has been completed, the transmitter increases the field_number by one in step 830 in order to set a start value and an end value for the next partitioning rule, and returns to step 818 in order to determine whether the field_number is less than the num_field N.

If the field_number is not less than the num_field N as a result of the determination in step 818, it indicates that the setup of the start value and end value for partitioning rules used in the current IP stream has been completed, so that the transmitter increases the IP_stream_number by one in order to set the start value and end value for partitioning rules used in the next IP stream (step 820), and returns to step 816 in order to determine whether the IP_stream_number is less than the P of the n_o_IPstream.

When the IP_stream_number is not less than the P of the n_o_IPstream as a result of the determination in step 816, it indicates that the setup for all IP streams to be used has been completed, so that the transmitter encodes the partition declaration field within the ESG INIT container so that the partition declaration field contain the set values (step 832). Then, according to the second embodiment of the present invention, the transmitter inserts an ESG service ID list including service IDs of services related to corresponding ESG data into the ESG INIT container in step 834. Next, the transmitter collects all encoded ESG data including the ESG INIT container, which contains the partition declaration field and the ESG service ID list, in step 836, and transmits the collected ESG data to the receiver through P number of IP streams in step 838. In this case, the ESG data is partitioned according to the partitioning rules and partitioning values of each IP stream, and is then inserted into the IP streams.

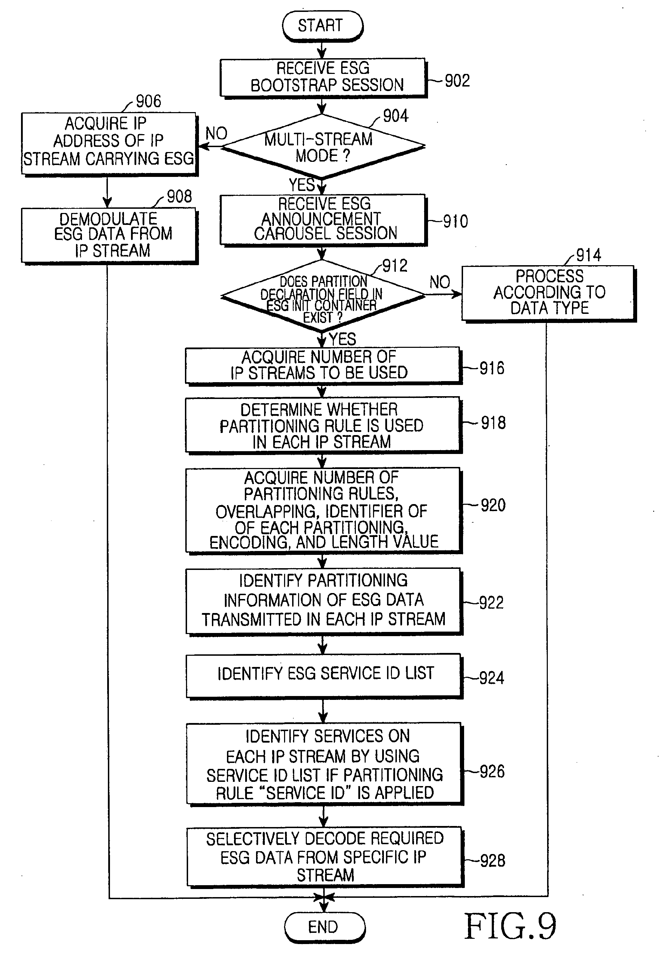

FIG. 9 illustrates the operation of the receiver according to the second embodiment of the present invention.

First, the receiver receives ESG bootstrap data through an ESG bootstrap session in order to decode ESG data (step 902). The ESG bootstrap session is a session through which basic information required for the receiver to acquire information about at least one IP stream transmitting the ESG data is transmitted. The IP address of the ESG bootstrap session is always fixed, and the receiver already knows the fixed IP address. Accordingly, when the receiver wants to decode ESG data, the receiver receives ESG bootstrap data including the basic information through the ESG bootstrap session before anything else.

By referencing the ESG bootstrap data, the receiver determines whether the ESG is transmitted in the multi-stream mode or in the single stream mode (step 904). When the single stream mode is used, the receiver acquires the IP address of the IP stream transmitting the ESG from the ESG bootstrap data (step 906), and then receives ESG data through the IP stream based on the acquired IP address and decodes the received ESG data (step 908).

In contrast, when the multi-stream mode is used, the receiver acquires the IP address of an ESG announcement carousel session from the ESG bootstrap data, and receives announcement carousel information including an ESG INIT container through the ESG announcement carousel session (step 910). The ESG announcement carousel session is for transmitting structural information about a plurality of IP streams carrying an ESG when the ESG is transmitted in the multi-stream mode, in which an ESG INIT container including structural information about the IP streams is transmitted through the ESG announcement carousel session.

The receiver attempts to find a partition declaration field from the ESG INIT container received through the ESG announcement carousel session (step 912). If the receiver cannot find the partition declaration field from the ESG INIT container, the receiver receives and properly processes ESG data according to a data type indicated by the ESG announcement carousel information (step 914). In contrast, when receiver has found the partition declaration field from the ESG INIT container, the receiver acquires the number P of IP streams used for transmission of the ESG (step 916). When acquiring the number P of IP streams, the receiver determines whether partitioning is used in each IP stream by referencing the partition declaration field (step 918).

After determining whether partitioning is used, the receiver acquires parameters required for the use of the multi-stream mode from the partition declaration field (step 920). The parameters required for the use of the multi-stream mode include the number (num_fields=N) of partitioning rules, an overlapping parameter, each partitioning identifier, an encoding parameter and a partitioning length. From the parameters, the receiver finds out partitioning information regarding which partitioning rule is used in ESG data transmitted in each IP stream, which IP stream is used to transmit fragments corresponding to each partitioning rule, etc., in step 922. In addition, the receiver acquires an ESG service ID list from the ESG INIT container in step 924.

Then, the receiver identifies a partitioning rule used in each IP stream from the partitioning information in step 926. Particularly, with respect to at least one IP stream to which the partitioning rule "service ID" is applied, the receiver checks services having service IDs, which exist between a "start_field_value" and an "end_field_value," for the "service ID," by referencing the service ID list, and then identifies which IP stream carries the services. The receiver selectively receives only a specific IP stream including specific service information and decodes desired ESG data, according to the setup of the receiver or the input/selection of the user (step 928).

Hereinafter, the configurations of the transmitter and receiver, which are applied in common to both the first and second embodiments of the present invention, will be described.

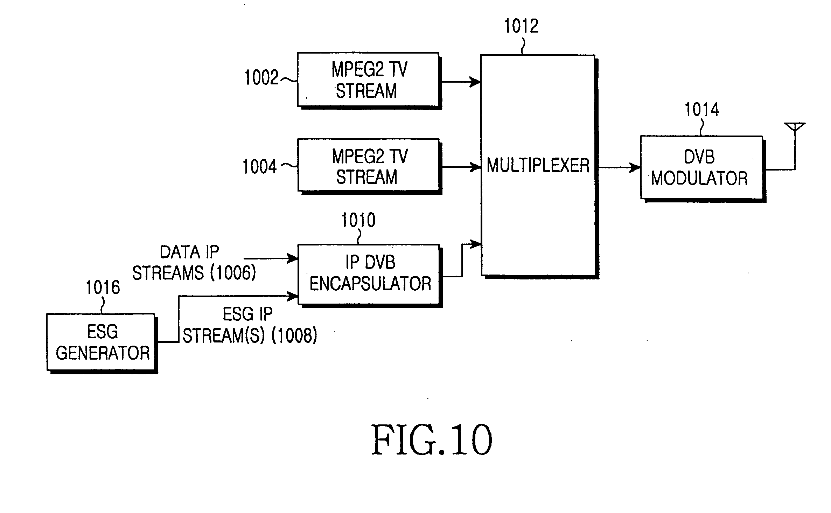

FIG. 10 illustrates the configuration of a transmitter according to the present invention, in which the configuration of a transmitter applied to a DVB system is illustrated as an example.

A plurality of MPEG-2 streams 1002 and 1004, which are TV streams, are input to a DVB transmitter, and at least one data IP stream 1006 is also input to the DVB transmitter. The data IP stream 1006 includes IP-based service data. ESG data 1008, which is generated to transmit service information about the MPEG-2 TV streams 1002 and 1004 and the data IP stream 1006, is also input in the form of one or more IP streams to the DVB transmitter.

The ESG data is generated by an ESG generator 1016 based on one of the aforementioned embodiments of the present invention, has the form of one or more IP streams. The IP streams 1006 and 1008 are encapsulated into an MPEG-2 transport stream (TS) by a DVB IP encapsulator 1010, and then multiplexed with the MPEG-2 TV streams 1002 and 1004 by a multiplexer 1012. The multiplexed TS is modulated to an Orthogonal Frequency Division Multiplex (OFDM) symbols by a DVB modulator 1014, and is then transmitted through an antenna.

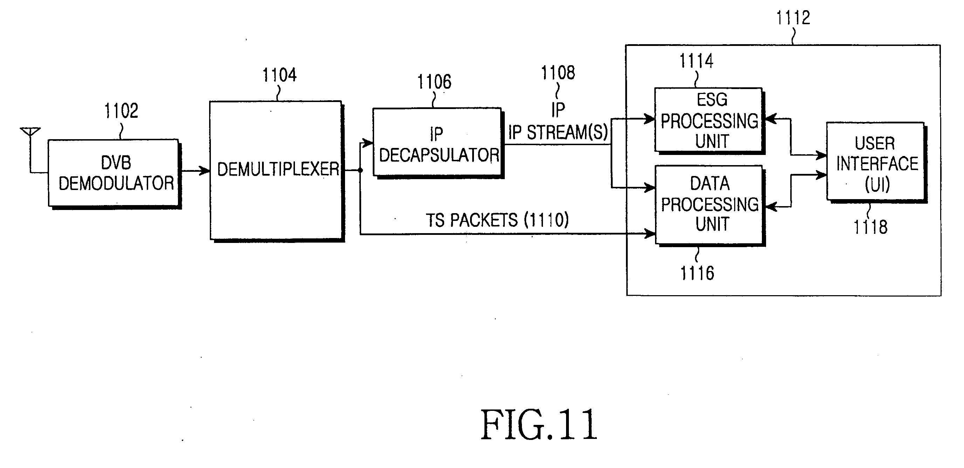

FIG. 11 illustrates the configuration of a receiver according to the present invention, in which the configuration of a receiver applied to a DVB system is illustrated as an example.

A DVB receiver receives a radio signal through an antenna. The received radio signal is reconstructed through an OFDM demodulation process in a DVB demodulator 1102. The demodulated data is separated into IP-encapsulated packets and MPEG-2 TS packets 1110 by a demultiplexer 1106. The TS packets 1110 is transferred to a data processing unit 1116 of a broadcasting reception unit 1112, and is subjected to a series of processing steps necessary for showing a corresponding service to the user.

The IP-encapsulated packets are decapsulated to restore IP streams 1108, which are separated into at least one ESG IP stream and at least one data IP stream. The data IP stream is input to the data processing unit 1116 as the TS packets. The ESG IP stream is input to an ESG processing unit 1114 which analyzes ESG data from the ESG IP stream. When the ESG data is transmitted in a multi-stream mode, the ESG processing unit 1114 receives required parameters from the ESG data and analyzes the parameters. The ESG data is selectively decoded according to the user's request through a user interface 1118 if necessary, and the decoded ESG data is stored or output through the user interface 1118.

According to the present invention, when an ESG is transmitted using a multi-stream mode in a digital broadcasting system, ESG information can be efficiently grouped, so that the user can easily select and receive required ESG data.
While the present invention has been shown and described with reference to certain exemplary embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

## Claims

1. A method for transmitting an Electronic Service Guide (ESG) in a digital broadcasting system, the method comprising the steps of:
collecting ESG data to be transmitted;
setting a number of Internet protocol (IP) streams to transmit the ESG data in order to transmit the ESG data in a multi-stream mode;
generating partitioning information used for each of the IP streams, the partitioning information including at least one partitioning rule to partition the ESG data into the IP streams and at least one partitioning value for the at least one partitioning rule, in which the at least one partitioning rule includes at least one among a service ID, a service genre, an absolute time, a session type, and a profiling type defined by a provider, and the at least one partitioning value includes at least one of a start value and an end value according to the at least one partitioning rule; and
transmitting the ESG data, which has been partitioned according to the partitioning information, through the IP streams.

2. The method as claimed in claim 1, wherein the partitioning rule indicating the service genre has a field form and a value which are equal to those of a service genre element included in a service fragment of the ESG data.

3. The method as claimed in claim 1, wherein when transmitting the ESG data, the ESG data which corresponds to a partitioning rule of each of the IP streams and to the at least one partitioning value is included in each of the IP streams.

4. The method as claimed in claim 1, further comprising inserting a service ID list to be used in applying the partitioning rule of the service ID into the partitioning information.

5. The method as claimed in claim 1, wherein the partitioning information is transmitted through a partition declaration field of an ESG INITialization (INIT) container which carries structural information of the ESG data.

6. The method as claimed in claim 1, wherein the partitioning information includes a description field for describing the at least one partitioning rule used for the IP streams.

7. The method as claimed in claim 1, wherein the partitioning information indicates transmitting a notification message reporting a change in a service and/or system as one of the partitioning rules.

8. The method as claimed in claim 1, wherein the partitioning value for the profiling type and/or the session type includes any one of the start value and the end value.

9. The method as claimed in claim 8, wherein the partitioning value for the session type indicates transmitting a notification message reporting a change in a service and/or system as one of the session types.

10. A method for receiving an Electronic Service Guide (ESG) in a digital broadcasting system, the method comprising the steps of:
receiving partitioning information for ESG data partitioned into and transmitted through a plurality of IP streams, the partitioning information including at least one partitioning rule to partition the ESG data into the IP streams and at least one partitioning value for the at least one partitioning rule, in which the at least one partitioning rule includes at least one among a service Identification (ID), a service genre, an absolute time, a session type, and a profiling type defined by a provider, and the at least one partitioning value includes at least one of a start value and an end value according to the at least one partitioning rule; and
selectively receiving desired ESG data through a specific Internet protocol (IP) stream carrying the desired partitioned ESG data of the ESG data, by using the partitioning information.

11. The method as claimed in claim 10, wherein the partitioning rule indicating the service genre has a field form and a value which are equal to those of a service genre element included in a service fragment of the ESG data.

12. The method as claimed in claim 10, further comprising:
acquiring a service ID list from the partitioning information, the service ID list being used for a first IP stream to which the partitioning rule of the service ID is applied; and
identifying services included in the first IP stream by referencing the service ID list, and a start value and an end value for a partitioning rule of the first IP stream.

13. The method as claimed in claim 10, wherein the partitioning information is received through a partition declaration field of an ESG INIT container which carries structural information of the ESG data.

14. The method as claimed in claim 10, wherein the partitioning information includes a description field for describing the at least one partitioning rule used for the IP streams.

15. The method as claimed in claim 10, wherein the partitioning information indicates transmitting a notification message reporting a change in a service and/or system as one of the partitioning rules.

16. The method as claimed in claim 10, wherein the partitioning value for the profiling type and/or the session type includes any one of the start value and the end value.

17. The method as claimed in claim 16, wherein the partitioning value for the session type indicates transmitting a notification message reporting a change in a service and/or system as one of the session types.

18. An apparatus for transmitting an Electronic Service Guide (ESG) in a digital broadcasting system, the apparatus comprising:
an ESG generator for collecting ESG data and generating a plurality of ESG Internet protocol (IP) streams which include the ESG data;
an IP encapsulator for receiving the ESG IP streams and/or data IP streams and encapsulating the received IP streams into a transmission stream;
a multiplexer for receiving the transmission stream from the IP encapsulator, receiving TeleVision (TV) transmission streams, and multiplexing the received transmission streams; and
a modulator for modulating and transmitting the transmission streams, which have been multiplexed by the multiplexer, through an antenna,
wherein the ESG generator:
sets a number of the ESG IP streams in order to transmit the ESG data in a multi-stream mode;
generates partitioning information used for each of the IP streams, the partitioning information including at least one partitioning rule to partition the ESG data into the ESG IP streams and at least one partitioning value for the at least one partitioning rule, in which the at least one partitioning rule includes at least one among a service Identification (ID), a service genre, an absolute time, a session type, and a profiling type defined by a provider, and the at least one partitioning value includes at least one of a start value and an end value according to the at least one partitioning rule; and
transmits the ESG data, which has been partitioned according to the partitioning information, through the IP streams.

19. The apparatus as claimed in claim 18, wherein the partitioning rule indicating the service genre has a field form and a value which are equal to those of a service genre element included in a service fragment of the ESG data.

20. The apparatus as claimed in claim 18, wherein the ESG generator inserts, into each of the IP streams, the ESG data which corresponds to a partitioning rule of each of the IP streams and to the at least one partitioning value.

21. The apparatus as claimed in claim 18, wherein the ESG generator inserts a service ID list to be used in applying the at least one partitioning rule of the service ID into the partitioning information.

22. The apparatus as claimed in claim 18, wherein the partitioning information is transmitted through a partition declaration field of an ESG INITialization (INIT) container which carries structural information of the ESG data.

23. The apparatus as claimed in claim 18, wherein the partitioning information includes a description field for describing the at least one partitioning rule used for the IP streams.

24. The apparatus as claimed in claim 18, wherein the partitioning information indicates transmitting a notification message reporting a change in a service and/or system as one of the at least one partitioning rules.

25. The apparatus as claimed in claim 18, wherein the partitioning value for the profiling type and/or the session type includes any one of the start value and the end value.

26. The apparatus as claimed in claim 25, wherein the partitioning value for the session type indicates transmitting a notification message reporting a change in a service and/or system as one of the session types.

27. An apparatus for receiving an Electronic Service Guide (ESG) in a digital broadcasting system, the apparatus comprising:
a demodulator for demodulating a signal received through an antenna and outputting the demodulated signal;
a demultiplexer for separating the demodulated data into Internet protocol (IP)-encapsulated packets and transmission streams;
an IP decapsulator for decapsulating the IP-encapsulated packets so as to output a plurality of ESG IP streams and service data IP streams;
an ESG processing unit for acquiring ESG data from the ESG IP streams; and
a data processing unit for receiving the transmission streams and/or the service data IP streams and processing the received streams so that a user can recognize contents of the streams,
wherein the ESG processing unit:
receives partitioning information for the ESG data partitioned into and transmitted through the ESG IP streams, the partitioning information including at least one partitioning rule to partition the ESG data into the ESG IP streams and at least one partitioning value for each of the partitioning rule, in which the partitioning rule includes at least one among a service Identification (ID), a service genre, an absolute time, a session type, and a profiling type defined by a provider, and the at least one partitioning value includes at least one of a start value and an end value according to the partitioning rule; and
selectively receives desired ESG data through a specific IP stream carrying the desired partitioned ESG data of the ESG data, by using the partitioning information.

28. The apparatus as claimed in claim 27, wherein the partitioning rule indicating the service genre has a field form and a value which are equal to those of a service genre element included in a service fragment of the ESG data.

29. The apparatus as claimed in claim 27, wherein the ESG processing unit acquires a service ID list from the partitioning information, the service ID list being used for a first IP stream to which the partitioning rule of the service ID is applied; and
identifies services included in the first IP stream by referencing the service ID list, and a start value and an end value for a partitioning rule of the first IP stream.

30. The apparatus as claimed in claim 27, wherein the partitioning information is received through a partition declaration field of an ESG INITialization (INIT) container which carries structural information of the ESG data.

31. The apparatus as claimed in claim 27, wherein the partitioning information includes a description field for describing the at least one partitioning rule used for the IP streams.

32. The apparatus as claimed in claim 27, wherein the partitioning information indicates transmitting a notification message reporting a change in a service and/or system as one of the at least one partitioning rules.

33. The apparatus as claimed in claim 27, wherein the partitioning value for the profiling type and/or the session type includes any one of the start value and the end value.

34. The apparatus as claimed in claim 33, wherein the partitioning value for the session type indicates transmitting a notification message reporting a change in a service and/or system as one of the session types.
